Europäisches Patentamt

European Patent Office

Office européen des brevets

(19)

(11) Veröffentlichungsnummer: **0 123 994**
**A1**

(12) **EUROPÄISCHE PATENTANMELDUNG**

(21) Anmeldenummer: **84104235.1**

(22) Anmeldetag: **14.04.84**

(51) Int. Cl.³: **F 24 H 1/44, F 24 H 1/28,**
F 24 H 1/22, F 28 D 7/08

(30) Priorität: **28.04.83 DE 8312496 U**
**29.08.83 DE 3331054**
**17.09.83 DE 3333730**
**21.01.84 DE 3402088**

(43) Veröffentlichungstag der Anmeldung: **07.11.84**
**Patentblatt 84/45**

(84) Benannte Vertragsstaaten: **AT BE CH DE FR GB IT LI NL**
**SE**

(71) Anmelder: **Etablissement Agura, FL-9490 Vaduz (LI)**

(72) Erfinder: **Kehrel, Herbert, Schwefelstrasse 25,**
**FL-9490 Vaduz (LI)**

(74) Vertreter: **Patentanwälte Schulze Horn und Hoffmeister,**
**Goldstrasse 36, D-4400 Münster (DE)**

(54) **Kondensatheizkessel mit einem mäanderförmigen Wärmeaustauschteil.**

(57) Kondensatheizkessel mit einem Brennraum (1) und einem ein Wärmeabführmedium führenden, doppelwandigen Teil (2), dessen Wärmeaustauschwände zwischen sich einen Rauchgaskanal (3) für die aus dem Brennraum (1) aufsteigenden Rauchgase bilden, in welchem die Rauchgase beim Durchströmen durch Wärmeabgabe an die Wärmeaustauschwände bis unter ihren Taupunkt abgekühlt werden, wobei der doppelwandige Teil (2) mäanderförmig mit im wesentlichen gleichförmigen, horizontal angeordneten Mäanderschlingen gebogen ist, die Wärmeaustauschwände jeder Mäanderschlinge Noppen (4) aufweisen, die den Rauchgaskanal (3) durchsetzen und an einer Wärmeaustauschwand einer gegenüberliegenden Mäanderschlinge anliegen, und im Rauchgaskanal (3) die Rauchgase im Gegenstrom zum Wärmeabführmedium und quer zum Fluß des Wärmeabführmediums mäanderförmig durch den doppelwandigen Teil (2) geführt sind.

Kondensatheizkessel mit einem mäanderförmigen Wärmeaustauschteil


Die Erfindung betrifft einen Kondensatheizkessel mit
einem Brennraum und einem ein Wärmeabführmedium führenden, doppelwandigen Teil, dessen Wärmeaustauschwände
zwischen sich einen Rauchgaskanal für die aus dem Brennraum aufsteigenden Rauchgase bilden, in welchem die
Rauchgase beim Durchströmen durch Wärmeabgabe an die
Wärmeaustauschwände bis unter ihren Taupunkt abgekühlt
werden.

Ein Heizkessel der genannten Art ist z. B. durch die
DE-OS 30 14 506.3 bekannt. Der bekannte Heizkessel weist
einen doppelwandigen Teil auf, der in Form einer Spirale
aufgewickelt ist. Im Zentrum der Spirale ist der Brennraum angeordnet, von dem aus der Rauchgaskanal spiralförmig zwischen den Spiralgängen des doppelwandigen
Teiles verläuft und am Ende der Spirale in einem Abluftstutzen mündet. In dem Rauchgaskanal werden die Rauchgase im Gegenstrom zum Fluß des Wärmeabführmediums im
doppelwandigen Teil geführt, wodurch ein intensiver
Wärmeaustausch zwischen den Rauchgasen und dem Wärmeabführmedium erreicht wird und die Rauchgase soweit abgekühlt werden, daß sich Kondensat bildet.

Ersichtlicherweise ist die spiralförmige Rauchgasführung
ungünstig, da sie dem Bestreben der erhitzten Rauchgase, nach oben zu steigen, nicht entgegenkommt. Da die Rauchgase zudem beim Durchlauf durch den Rauchgaskanal stark abgekühlt werden, müssen sie durch einen Ventilator am Ende des Rauchgaskanals in einem Zwangsumlauf durch den Kanal abgezogen werden. Es hat sich weiterhin gezeigt, daß die Herstellung eines spiralförmig gewickelten, doppelwandigen Wärmeaustauschteiles ziemlich aufwendig ist.

Der Erfindung liegt die Aufgabe zugrunde, einen Kondensat-Heizkessel anzugeben, bei dem die Rauchgase durch den doppelwandigen Teil besonders strömungsgünstig geführt werden, wobei weiterhin ein optimaler Wärmeaustausch zwischen Rauchgasen und Wärmeabführmedium gegeben sein soll. Der doppelwandige Wärmeaustauschteil des Heizkessels soll ferner einfach aufgebaut und so gestaltet sein, daß eine vollautomatische Kesselfertigung möglich ist.

Diese Aufgabe wird erfindungsgemäß dadurch gelöst, daß bei dem Kondensatheizkessel der doppelwandige Teil mäanderförmig mit im wesentlichen gleichförmigen, horizontal angeordneten Mäanderschlingen gebogen ist,
daß die Wärmeaustauschwände jeder Mäanderschlinge Noppen aufweisen, die den Rauchgaskanal durchsetzen und an einer Wärmeaustauschwand einer gegenüberliegenden Mäanderschlinge anliegen,
und daß im Rauchgaskanal die Rauchgase im Gegenstrom zum Wärmeabführmedium und quer zum Fluß des Wärmeabführmediums mäanderförmig durch den doppelwandigen Teil geführt sind.

Bei dieser Ausführung des erfindungsgemäßen Heizkessels stützen sich die Mäanderschlingen des doppelwandigen Wärmeaustauschteiles über den Noppen gegenseitig aneinander ab. Die Noppen sorgen zudem für eine optimale Verwirbelung der Rauchgase und somit für einen guten

0123994

Wärmeaustausch zwischen den Rauchgasen und den Wärmeaustauschwänden des doppelwandigen Teiles. Überraschenderweise lassen sich die Rauchgase beim Durchlauf durch den Rauchgaskanal soweit abkühlen, daß ihre Temperatur beim Rauchgasaustritt unter der Rücklauftemperatur des Wärmeabführmediums liegt.

Bei dem erfindungsgemäßen Heizkessel kommt die Rauchgasführung dem Bestreben der heißen Rauchgase, vom Brennraum aus nach oben in kältere Zonen des Kessels zu steigen, entgegen. Aufgrund der mäanderförmigen Rauchgasführung müssen die Rauchgase im Rauchgaskanal einen genügend langen Weg zurücklegen, der zudem große Wärmeaustauschflächen bietet, um einen guten Wärmeübergang zwischen den Rauchgasen und dem Wärmeabführmedium zu ermöglichen.

Um eine mäanderförmige Rauchgasführung zu erreichen, müssen die Rauchgase mehrmals umgelenkt werden. Zur Umlenkung der Rachgase nach Durchtritt durch einen horizontalen Abschnitt des Rauchgaskanals zwischen zwei Mäanderschlingen sind bei dem Heizkessel auf zwei gegenüberliegenden Seiten des mäanderförmigen, doppelwandigen Teiles Leitbleche angeordnet, an denen jede zweite Mäanderschlinge dichtend anliegt, wobei die dichtende Anlage wechselweise an dem einen und mal an dem anderen Leitblech erfolgt.

Eine fertigungstechnisch besonders einfache Ausbildung des doppelwandigen Teiles ist dadurch gegeben, daß die Wärmeaustauschwände des Teiles aus zwei seitlich ineinander geschobenen, genoppten und mäanderförmig gebogenen Blechen bestehen, deren einander überlappende, gefalzte Längsränder im Überlappungsbereich miteinander verschweißt sind.

In einer Ausführung, die eine besonders dichte Anordnung

der Noppen erlaubt, sind die Noppen auf den flachen, nicht gebogenen Abschnitten der Wärmeaustauschwände angeordnet, und zwar abwechselnd in mindestens drei parallelen Längsreihen und in mindestens zwei parallelen Längsreihen, wobei die Noppen der zuletzt genannten Reihen in die Zwischenräume der erstgenannten Reihen eines gegenüberliegenden Flachabschnittes einer Wärmeaustauschwand eingreifen.

Aufgrund der zweiteiligen Ausbildung des doppelwandigen Wärmeaustauschteiles ist es möglich, eine Wärmeaustauschschlange zur Brauchwassererhitzung in das Wärmeaustauschteil einzubauen. Vorteilhaft ist dabei vorgesehen, daß die Wärmeaustauschschlange den gesamten, das Wärmeabführmedium führenden Raum des Wärmeaustauschteiles durchsetzt. Aufgrund ihrer Länge verfügt die Wärmeaustauschschlange über eine erhebliche Speicherkapazität, die eine Ausrüstung des Heizkessels mit einem Boiler überflüssig macht. Durch die Wärmeaustauschschlange wird ferner auf einfache Weise eine Abstandshaltung zwischen den Wärmeaustauschwänden des Heizkessels erreicht.

Ein einfaches Verfahren zur Herstellung des erfindungsgemäßen Heizkessels, das zudem eine vollautomatische Fertigung des Kessels ermöglicht, ist dadurch gekennzeichnet, daß zur Fertigung des doppelwandigen Teiles zwei genoppte Bleche mäanderförmig gebogen, die Bleche anschließend randseitig gefalzt, seitlich ineinandergeschoben und randseitig verschweißt werden. Wenn der doppelwandige Teil des Heizkessels mit einer Wärmeaustauschschlange ausgerüstet werden soll, kann die Wärmeaustauschschlange zwischen die mäanderförmig gebogenen Bleche eingelegt werden, bevor die Bleche ineinander geschoben werden.

Ein Ausführungsbeispiel der Erfindung ist in der Zeichnung dargestellt und wird im folgenden näher beschrieben. Es zeigen:

Figur 1 eine Ansicht des erfindungsgemäßen Kondensatheizkessels in teilweise geschnittener Darstellung,

Figur 2 einen Schnitt des Kessels der Figur 1 parallel zu seiner Frontseite,

Figur 3 einen Schnitt des Kessels der Figur 1 parallel zu einer Seitenfläche,

Figur 4 eine Ansicht der mäanderförmig gebogenen Wärmeaustauschwände des Kessels,

Figur 5 eine Ansicht einer mäanderförmig gebogenen Wärmeaustauschschlange des Kessels,

Figur 6 einen Schnitt durch einen Flachabschnitt des doppelwandigen Teiles mit der Noppenanordnung auf der Außenseite der Wärmeaustauschwände,

Figur 7 einen Schnitt des Kessels in einer Ausführung als Ölheizkessel.

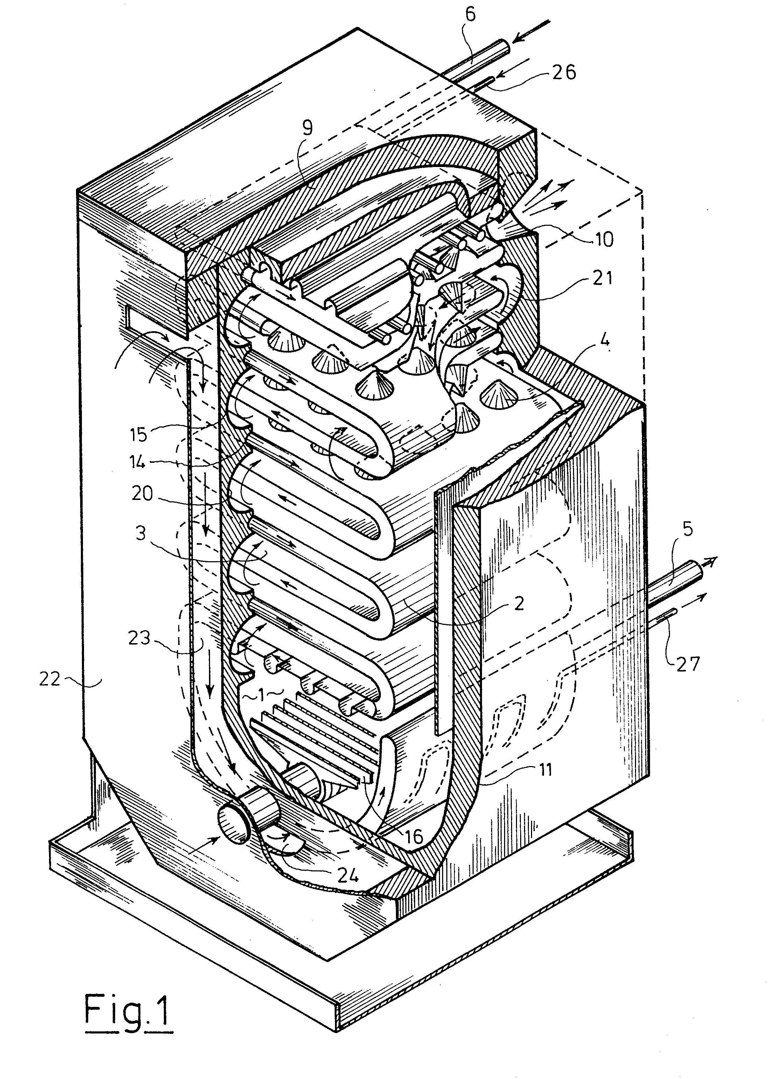

In Figur 1 ist ein erfindungsgemäßer Kondensat-Heizkessel dargestellt, der mit einer äußeren Wärmeisolierung 9 und einer Verkleidung 11 versehen ist. Der Heizkessel weist einen doppelwandigen, ein Wärmeabführmedium führenden Wärmeaustauschteil 2 auf, der oberhalb eines Brennraumes 1 des Kessels mäanderförmig gebogen ist. Der mäanderförmige Wärmeaustauschteil 2 bildet den oberen Abschluß des Brennraumes 1. Der Wärmeaustauschteil 2 geht nach unten in einen halbzylinderförmigen Abschnitt über, der den Brennraum 1 umfaßt, wodurch die Seitenbegrenzung und der Boden des Brennraumes 1 gebildet wird.

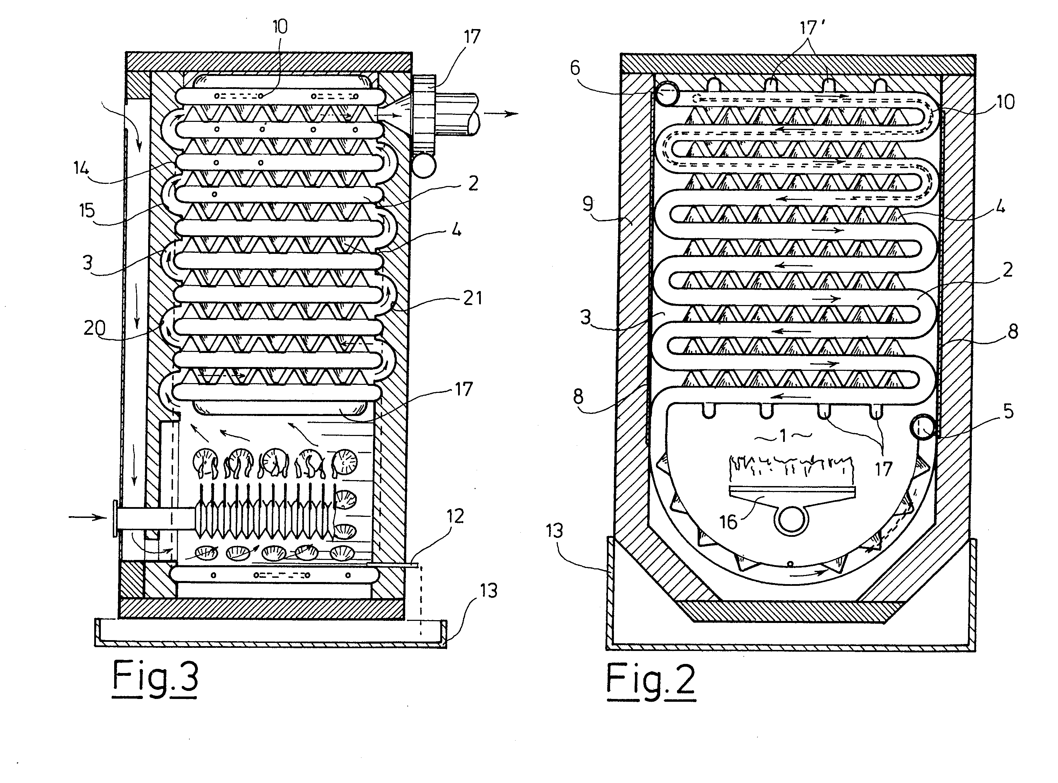

Wie aus Figur 1 und Figur 2 ersichtlich ist, sind die Mäanderschlingen des Wärmeaustauschteiles gleichförmig ausgebildet und liegen waagerecht übereinander. Die Wärmeaustauschwände des Teiles 2 weisen auf ihren ebenen, nicht gebogenen Bereichen, Noppen 4 auf, die in die Wärmeaustauschwände eingeprägt sind und nach außen zur Gasseite hin gerichtet sind. Die etwa kegelförmigen Noppen 4 durchsetzen den zwischen den waagerechten Flachabschnitten des Wärmeaustauschteiles 2 befindlichen Raum und liegen mit ihren Spitzen an einer gegenüberliegenden Wärmeaustauschwand des Teiles 2 an. Hierdurch wird erreicht, daß die Mäanderschlingen sich gegenseitig abstützen, und daß das Wärmeaustauschteil 2 äußerst kompakt aufgebaut ist.

Der Raum zwischen den waagerechten Flachabschnitten des Wärmeaustaschteiles 2 bildet einen Rauchgaskanal 3 für die Rauchgase, die aus dem Brennraum 1 des Kessels hochsteigen. Wie insbesondere aus Figur 2 ersichtlich ist, ist der Rauchgaskanal 3 seitlich durch zwei zu beiden Seiten des Wärmeaustauschteiles 2 angeordnete Abschlußbleche 8 begrenzt. Die Abschlußbleche 8 liegen an den Rundungen der Mäanderschlingen, die keine Noppen 4 aufweisen, an. Den Abschlußblechen 8 kommt eine weitere, wichtige Funktion zu, da sie verhindern, daß sich im Betriebszustand des Kessels die Mäanderform des Wärmeaustauschteiles 2 aufweitet.

Wie aus Figur 1 und insbesonder auch aus Figur 3 ersichtlich ist, ist der Rauchgaskanal 3 auf der Vorder- und Rückseite des Wärmeaustauschteiles 2 durch Leitbleche 20 bzw. 21 begrenzt. In die Leitbleche 20 und 21 sind im Querschnitt halbkreisförmige Vertiefungen 14 und 15 eingeprägt, die unterschiedliche Tiefe aufweisen. Die Vertiefungen 14 und 15 verlaufen parallel zu den horizontalen Flachabschnitten des Wärmeaustauschteiles 2.
Bei jedem der Leitbleche 20 und 21 liegt der Rand jedes
zweiten Flachabschnittes des Wärmeaustauschteiles 2 in
einer Vertiefung 14 und ist gegen die Blechwandung durch
einen Dichtstreifen, z. B. aus Asbest-Schnur, abgedichtet. Bei den Leitblechen 20 und 21 sind die Dichtstellen
14 versetzt gegeneinander angeordnet.

Im Bereich der Vertiefungen 15 liegen die Flachabschnitte des Wärmeaustauschteiles 2 nicht an den Leitblechen
20 und 21 an. In den Vertiefungen 15 erfolgt die Umlenkung der Rauchgase, die aus einem Abschnitt des Rauchgaskanales 3 zwischen zwei horizontalen Flachabschnitten
des Wärmeaustauschteiles 2 austreten, in den nächsthöheren Rauchgaskanalabschnitt. Da die Vertiefungen 14 und
15 der Leitbleche 20 und 21 weiterhin so versetzt zueinander angeordnet sind, daß eine Vertiefung 14 des Leitbleches 20 einer Vertiefung 15 des Leitbleches 21 gegenübersteht und umgekehrt, verläuft der Rauchgaskanal 3
von der Brennkammer 1 aus mäanderförmig zwischen den
Mäanderschlingen des Wärmeaustauschteiles 2. Der Rauchgaskanal 3 mündet am oberen Ende des Wärmeaustauschteiles 2 in einen Rauchgassammelkanal, an den ein
Abgasventilator 17 mit Austrittstutzen angesetzt ist.

Dem Wärmeaustauschteil 2 wird am oberen Ende über einen
Rücklauf 6 das Wärmeabführmedium zugeführt. Das Wärmeabführmedium kann z. B. Wasser sein, das in einer an den
Kessel angeschlossenen Heizungsanlage zirkuliert. Wie
Figur 2 zeigt, durchströmt das Wärmeabführmedium in
Pfeilrichtung den Wärmeaustauschteil 2 und verläßt
diesen aufgeheizt am Ende des halbzylinderförmigen Abschnittes über einen Vorlauf 5.

Wie aus dem vorstehenden ersichtlich ist, werden die
Rauchgase, deren mäanderförmiger Weg in Figur 3 durch
Pfeile gekennzeichnet ist, im Gegenstrom zum Strom des Wärmeabführmediums geführt, wodurch ein intensiver Wärmeaustausch erreicht wird. Da die Rauchgase durch den Wärmeaustausch bis unter ihren Taupunkt abgekühlt werden, fällt im oberen Bereich des Rauchgaskanales 3 Kondensat an, das dem Rauchgasstrom entgegengesetzt in Richtung des Brennraumes 1 ablaufen kann.

Ein Teil des Kondensatwassers verdampft dabei und wird mit den Rauchgasen abgeführt. Das überschüssige Kondensat läuft zum tiefsten Punkt des halbzylinderförmigen Abschnittes des Wärmeaustauschteiles 2 und wird von dort durch eine Kondensatleitung 12 einem unterhalb des Heizkessels angeordneten Kondensat-Auffangbehälter 13 zugeführt. Im Ausführungsbeispiel besteht der Kondensat-Auffangbehälter aus einer Auffangwanne 13, die zugleich die Standfläche des Kessels bildet.

Um eine Korrosion des Kessels durch das Kondensatwasser sicher auszuschließen, sind zumindest die Teile, die mit dem Kondensatwasser in Berührung kommen, aus V4A-(Cr/Ni/Mo)-Edelstahl oder aus Aluminium gefertigt.

Das Ausführungsbeispiel der Figuren 1 bis 3 zeigt den Heizkessel als Gasheizkessel, bei dem ein Gasbrenner 16 im unteren Bereich des Brennraumes 1 angeordnet ist. Bei dieser Anordnung wird der brennbare Anteil des Heizgases besonders gut ausgenutzt, und es wird ferner erreicht, daß der untere horizontale Flachabschnitt des Wärmeaustauschteiles 2 in die heißeste Zone des Brennraumes 1 eintaucht.

Bei diesem Flachabschnitt trägt die zum Brennraum 1 gerichtete Wärmeaustauschwand Querrippen 17, die verhindern, daß beim Betrieb des Heizkessels die Wand durch den Überdruck des Heizungswassers im Wärmeaustauschteil ausbeult. Querrippen 17' weist auch die Wärmeaustauschwand auf, die auf der Oberseite des Wärmeaustauschteiles 2 zur Kesselverkleidung hin gerichtet ist.

Wie bereits oben erwähnt, ist der Heizkessel von einem Wärmeisolationsmantel 9 umgeben. Auf seiner Außenseite weist der Isolationsmantel 9 vorteilhaft eine verlorene Schalung (nicht gezeigt) aus dünnwandigem Blech auf, an dem das Material des Isolationsmantels, das vorzugsweise aus nicht brennbarem Phenolharzschaum besteht, haftet. Bei der Kesselherstellung bringt die verlorene Schalung den Vorteil, daß der Raum zwischen Leitblechen 21, 22, Abschlußblechen 8 und der verlorenen Schalung ausgeschäumt werden kann, ohne daß man Formteile benutzen muß. In der Schalung und dem Isolationsmantel werden ferner die Anschlußleitungen des Kessels sicher eingebunden.

Zur Kühlung des Isolationsmantels 9 und gleichzeitiger Vorwärmung der Verbrennungsluft ist auf der Frontseite des Kessels zwischen Wärmeisolationsmatel 9 und einer Kesselverkleidung 22 eine luftführende Kammer 23 gebildet. Die Kammer 23 weist an ihrem oberen Ende eine Luftzutrittsöffnung 24 auf. Unterhalb einer Gaszuführung für den Brenner 16 ist die Kammer 23 durch eine Öffnung 25 mit dem Brennraum 1 verbunden. Luft, die durch die Luftzutrittsöffnung 24 in die Kammer 23 eingesaugt wird, muß auf dem Weg zur Öffnung 25 an der gesamten Frontfläche des Wärmeisolationsmantels 9 entlangstreichen, wobei die Luft vorgewärmt wird und anschließend vorgewärmt in den Brennraum 1 eintritt. Durch die Luftkühlung lassen sich Wärmeverluste auf der Frontseite des Kessels vermeiden. Weiterhin läßt sich durch die Zufuhr bereits vorgewärmter Verbrennungsluft in den Brennraum die Gasverbrennung so weit verbessern, daß nur noch geringe Kohlenmonoxid-Gehalte in den Rauchgasen auftreten.

Um einen möglichst großen Teil des Isolationsmantels 9 zu kühlen, können anstatt einer auch mehrere Luftzutrittsöffnungen 24 in der Kesselverkleidung 22 vorhanden sein.

Zur Wartung und Reinigung des Kessels kann die frontseitige Verkleidung 22 zusammen mit dem zugeörigen Teil des Isolationsmantels 9 abgenommen werden, wodurch der Wärmeaustauschteil 2 und der Brennraum 1 leicht zugänglich werden.

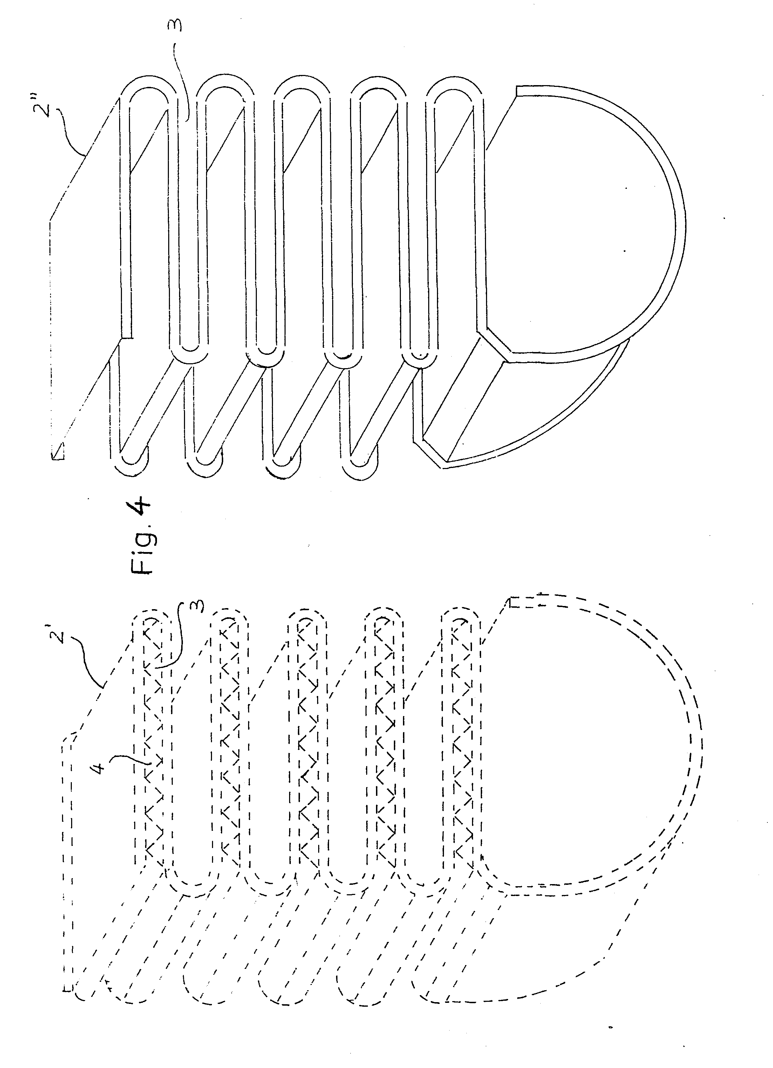

Figur 4 zeigt den Aufbau des Wärmeaustauschteiles 2 aus zwei Teilstücken 2' und 2". Die Teilstücke 2' und 2" bestehen aus einseitig genoppten Edelstahlblechen, die mäanderförmig vorgebogen sind. Die Ränder der Bleche 2' und 2" sind so gefalzt, daß bei den seitlich ineinander geschobenen Teilen die gefalzten Randbereiche einander überlappen, und die Teile anschließend an der Stoßkante im Überlappungsbereich verschweißt werden können.

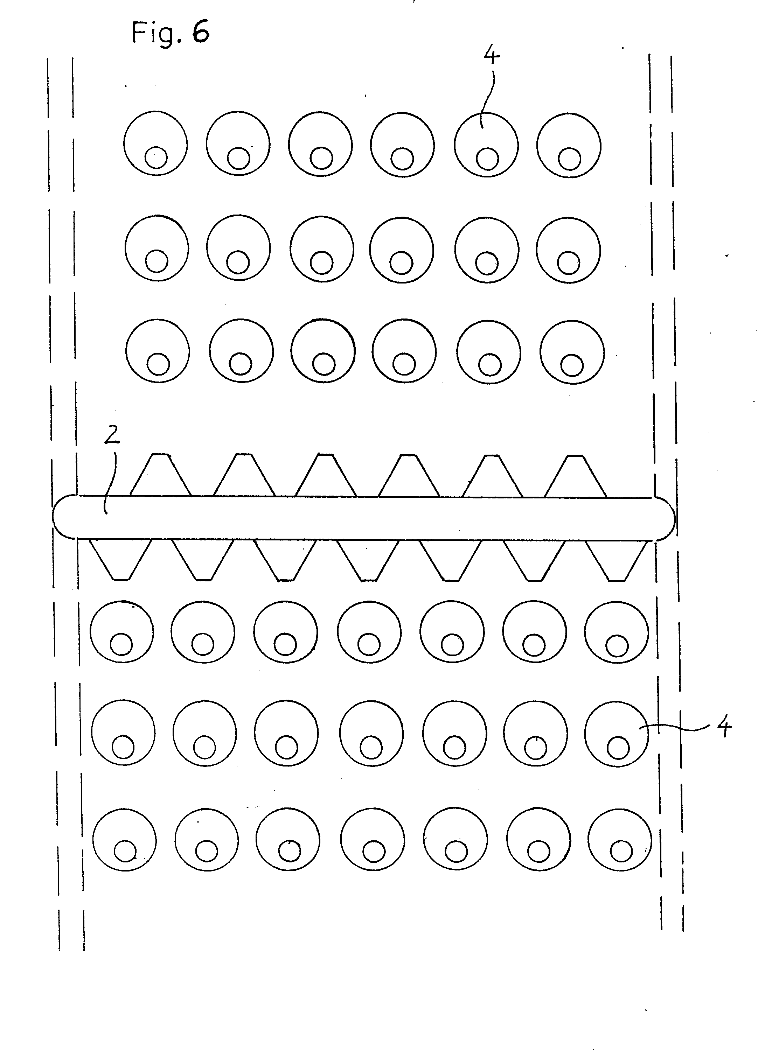

Bei den Teilstücken 2' und 2" liegen die horizontalen Flachabschnitte mit ihren Noppen derart beieinander, daß die Noppen des oberen Flachabschnittes in die Zwischenräume zwischen den Noppen des unteren Flachabschnittes eingreifen. Die genaue Anordnung der Noppen 4 auf den Blechen 2' und 2" ist aus Figur 6 ersichtlich. Danach sind auf den Flachabschnitten der Bleche 2' und 2" die Noppen 4 abwechselnd einmal in sechs und in sieben parallelen Längsreihen angeordnet. In der Figur 4 sind die Noppen der Übersichtlichkeit wegen bei dem Blech 2" weggelassen.

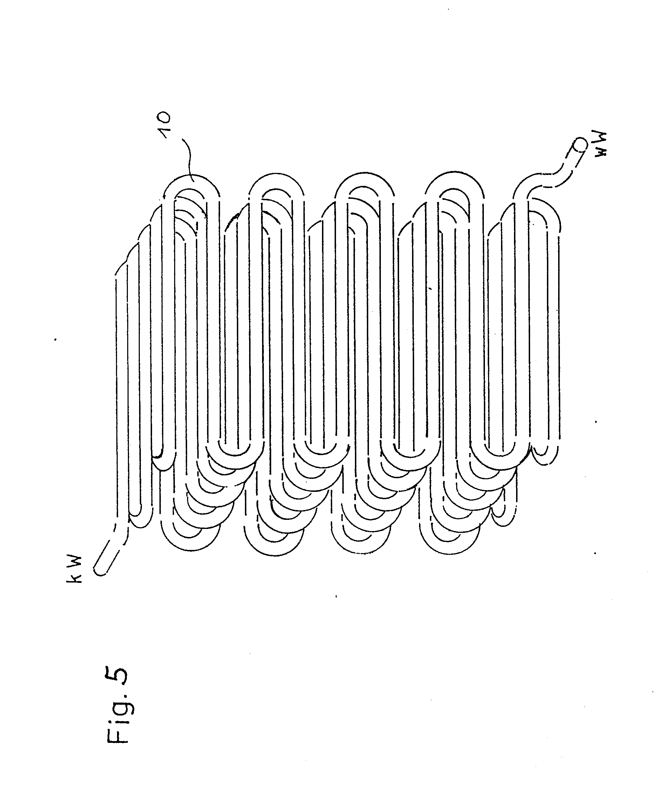

In der Figur 5 ist eine Wärmeaustauschschlange 10 gezeigt, die in den Wärmeaustauschteil 2 des Heizkessels zur Brauchwasseraufheizung eingebaut werden kann und aufgrund ihrer Länge ein Warmwasser-Reservoir mit großer Speicherkapazität darstellt. Die Warmeaustauschschlange 10 ist in einem Stück als Register aus mehreren, mäanderförmig gebogenen Lagen gefertigt. In diese Ausbildung durchsetzt die Wärmeaustauschschlange 10, wie in Figur 1 und 2 angedeutet, den mäanderförmig gebogenen Teil des Wärmeaustauschteiles 2. Vorteilhaft liegt dabei die Wärmeaustauschschlange 10 an der Innenseite der Wärmeaustauschwände des Teiles 2 an.

Die Wärmeaustauschschlange 10 kann auch in den halbzylinderförmigen Abschnitt des Wärmeaustauschteiles 2 weitergeführt sein. Die Kaltwasserzulauf- bzw. Warmwasserablaufleitungen 26 und 27 der Wärmeaustauschschlange 10 verlaufen dann parallel zum Rücklauf bzw. Vorlauf des Wärmeaustauschteiles 2. Bei der Kesselfertigung wird die Wärmeaustauschschlange 10 als fertig gebogenes Register zwischen die Teilstücke 2' und 2" des Wärmeaustauschteiles gelegt.

Bei dem erfindungsgemäßen Heizkessel ist es möglich, mehrere Wärmeaustauschteile 2 hintereinander zu schalten, wenn ein Kessel mit höherer Leistung gewünscht wird. Die einzelnen Wärmeaustauschteile 2 des Kessels weisen dann einen gemeinsamen Vorlauf und Rücklauf auf, und der Gasbrenner ist der neuen Brennraumlänge entsprechend angepaßt. Dies ist besonders für die Kesselproduktion vorteilhaft, da ausgehend von einer Grundeinheit des Wärmeaustauschteiles Kessel mit unterschiedlichen Heizleistungen zusammengestellt werden können.

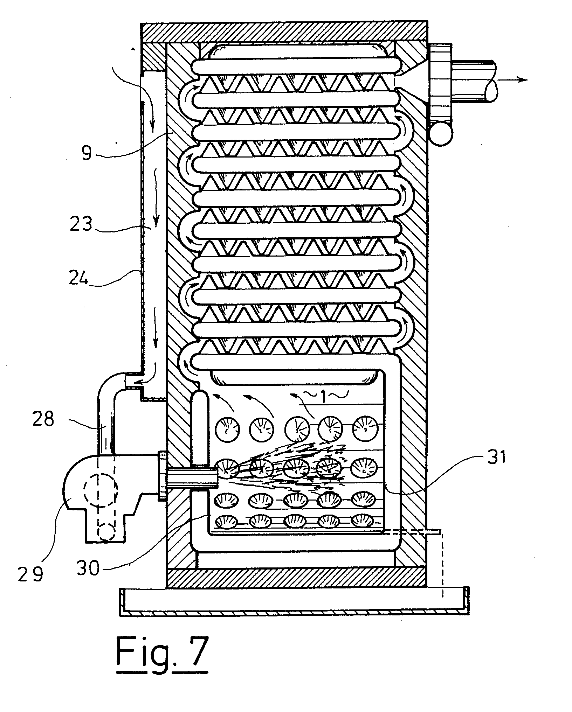

In weiterer Ausgestaltung kann der Kessel gemäß Figur 7 auch als Ölheizkessel eingesetzt werden. In dieser Ausführung weist der halbzylinderförmige Abschnitt des Wärmeaustauschteiles 2 auch auf der Vorder- und Rückseite wasserdurchflossene, doppelwandige Kühlflächen 30 und 31 auf, die die Kesselwandung von der direkten Einwirkung der Ölbrennerflamme schützen. Vorteilhaft bilden die Kühlflächen 30 und 31 Abschnitte des Wärmeaustauschteiles 2. Durch die Kühlfläche 30 ist ein an den Kessel

12

0123994

angesetzter Ölbrenner 29 mit seinem Brennerstutzen geführt. Die für die Zerstäubung und Verbrennung des Öls benötigte Verbrennungsluft wird dem Ölbrenner 29 vorgewärmt zugeführt. Die Luftansaugung des Brenners 29 ist dazu über eine Verbindungsleitung 28 mit der Vorwärmkammer 23 auf der Frontseite des Kessels verbunden.

Wie oben erwähnt, kann der Wärmeaustauschteil 2 auch aus Aluminium gefertigt sein. In dieser Ausführung kann der Teil 2 durch Spritz- oder Druckgießen oder auch im Strangpreßverfahren hergestellt werden.

Wichtig ist weiterhin, daß das bei der Verbrennung anfallende Kondensat ohne große Verweilzeit aus dem Wärmeaustauschteil 2 abgeführt wird. Um dies zu erreichen, können die flachen Abschnitte der Wärmeaustauschwände 2' und 2" zu den Seiten hin leicht geneigt sein. Ebenso kann auch der Boden des halbzylinderförmigen Abschnittes des Wärmeaustauschteiles 2 zum Kondensatablaß 12 hin leicht geneigt sein. Um die dann noch verbleibende Restfeuchtigkeit aus dem Wärmeaustauschteil 2 zu entfernen, kann beim Betreiben des Heizkessels so vorgegangen werden, daß der Ventilator des Kessels nach Unterbrechen der Brennertätigkeit noch eine Zeit lang weiterläuft, wobei die Feuchtigkeit im Kessel mit der Ansaugluft abgeführt wird.

Zur Vermeidung von Korrosion ist als zusätzliche Maßnahme vorgesehen, den Wärmeaustauschteil 2 auf der Rauchgasseite zumindest teilweise mit einer hitzebeständigen und säurefesten Beschichtung zu versehen. Eine Beschichtung ist insbesondere an den durch Spaltkorrosion gefährdeten Spitzen der Noppen 4 und den tief liegenden Bereichen des halbzylinderförmigen Abschnittes vorgesehen. Als Beschichtungsmaterial wird vorzugsweise Epoxidharz eingesetzt.

Patentansprüche:

1. Kondensatheizkessel mit einem Brennraum und einem ein Wärmeabführmedium führenden, doppelwandigen Teil, dessen Wärmeaustauschwände zwischen sich einen Rauchgaskanal für die aus dem Brennraum aufsteigenden Rauchgase bilden, in welchem die Rauchgase beim Durchströmen durch Wärmeabgabe an die Wärmeaustauschwände bis unter ihren Taupunkt abgekühlt werden, dadurch gekennzeichnet,
daß der doppelwandige Teil (2) mäanderförmig mit im wesentlichen gleichförmigen, horizontal angeordneten Mäanderschlingen gebogen ist,
daß die Wärmeaustauschwände jeder Mäanderschlinge Noppen (4) aufweisen, die den Rauchgaskanal (3) durchsetzen und an einer Wärmeaustauschwand einer gegenüberliegenden Mäanderschlinge anliegen,
und daß im Rauchgaskanal (3) die Rauchgase im Gegenstrom zum Wärmeabführmedium und quer zum Fluß des Wärmeabführmediums mäanderförmig durch den doppelwandigen Teil (2) geführt sind.

2. Heizkessel nach Anspruch 1, dadurch gekennzeichnet, daß zur Umlenkung der Rauchgase nach Durchtritt durch einen horizontalen Abschnitt des Rauchgaskanales (3) zwischen zwei Mäanderschlingen auf zwei gegenüberliegenden Seiten des mäanderförmigen, doppelwandigen Teiles (2) Leitbleche (20, 21) angeordnet sind, an denen jede zweite Mäanderschlinge dichtend anliegt, wobei die dichtende Anlage wechselweise an dem einen und mal an dem anderen Leitblech erfolgt.

3. Heizkessel nach Anspruch 1, dadurch gekennzeichnet, daß die Wärmeaustauschwände des doppelwandigen Teils (2) aus zwei seitlich ineinandergeschobenen, genoppten und mäanderförmig gebogenen Blechen (2', 2") bestehen, deren einander überlappende, gefalzte Längsränder im Überlappungsbereich miteinander verschweißt sind.

4. Heizkessel nach Anspruch 1, dadurch gekennzeichnet, daß die Noppen (4) auf den flachen, nicht gebogenen Abschnitten der Wärmeaustauschwände (2', 2") angeordnet sind, und zwar abwechselnd in mindestens drei parallelen Längsreihen und in mindestens zwei parallelen Längsreihen, wobei die Noppen (4) der zuletzt genannten Reihen in die Zwischenräume der erstgenannten Reihen eines gegenüberliegenden Flachabschnittes einer Wärmeaustauschwand eingreifen.

5. Heizkessel nach Anspruch 1, dadurch gekennzeichnet, daß der doppelwandige Wärmeaustauschteil (2) des Heizkessels einen halbzylinderförmigen Abschnitt aufweist, der den Brennraum (1) umfaßt.

6. Heizkessel nach Anspruch 5, dadurch gekennzeichnet, daß der halbzylinderförmige Abschnitt auf der zum Brennraum (1) gerichteten Wärmeaustauschwand und zumindest in deren Seitenwandbereich Noppen aufweist, die nach innen in den das Wärmeabführmedium führenden Raum des Abschnittes gerichtet sind.

7. Heizkessel nach Anspruch 5, dadurch gekennzeichnet, daß im tiefsten Punkt des halbzylinderförmigen Abschnittes eine Kondensatleitung (12) angeordnet ist, die das im Wärmeaustauschteil (2) anfallende Kondensat einem unterhalb des Heizkessels angeordneten Kondensatauffangbehälter (13) zuführt.

8. Heizkessel nach Anspruch 1, dadurch gekennzeichnet, daß die Seitenflächen des doppelwandigen, mäanderförmigen Teiles (2), in denen die großen Rundungen der Mäanderschlingen liegen, durch Abschlußbleche (8) begrenzt sind.

9. Heizkessel nach Anspruch 1, dadurch gekennzeichnet, daß die Wärmeaustauschwand des doppelwandigen Teiles (2), die eine zum Brennraum (1) gerichtete Flachseite aufweist, auf dieser Flachseite zum Brennraum gerichtete Querrippen (17) trägt.

10. Heizkessel nach Anspruch 9, dadurch gekennzeichnet, daß die Flachseite eine Wärmeaustauschwand auf der Oberseite des Wärmeaustauschteiles (2) ebenfalls Querrippen (17') aufweist.

11. Heizkessel nach Anspruch 1 mit einer Wärmeaustauschschlange zur Brauchwassererhitzung, dadurch gekennzeichnet, daß die Wärmeaustauschschlange (10) im Inneren des doppelwandigen Teiles (2) angeordnet ist.

12. Heizkessel nach Anspruch 11, dadurch gekennzeichnet, daß die Wärmeaustauschschlange (10) den gesamten Raum des doppelwandigen Teiles (2) durchsetzt.

13. Heizkessel nach Anspruch 11, dadurch gekennzeichnet, daß die Wärmeaustauschschlange (10) einteilig ausgebildet ist und ein Register aus mehreren mäanderförmig gebogenen Lagen bildet.

14. Heizkessel nach Anspruch 11, dadurch gekennzeichnet, daß die Wärmeaustauschschlange (10) an der Innenseite der Wärmeaustauschwände des doppelwandigen Teiles (2) aniegt.

15. Heizkessel nach Anspruch 1, mit einem Vor- und Rücklauf an dem doppelwandigen Teil zur Ab- bzw. Zuleitung des Wärmeabführmediums, dadurch gekennzeichnet, daß in dem Kessel mehrere doppelwandige Teile (2) hintereinandergeschaltet sind, die einen gemeinsamen Vor- und Rücklauf aufweisen.

16. Heizkessel nach Anspruch 1, dadurch gekennzeichnet, daß der doppelwandige Teil (2) einen Isolationsmantel (9) aus Hartschaum aufweist, der von einer Verkleidung oder verlorenen Schalung umgeben ist, mit der der Isolationsmantel (9) verbunden ist.

17. Heizkessel nach Anspruch 16, dadurch gekennzeichnet, daß der Hartschaum des Isolationsmantels (9) aus Phenolharz besteht.

18. Heizkessel nach Anspruch 1, mit einer Verkleidung auf der Frontseite des Kessels, die eine Durchtrittsöffnung für einen Brenner sowie einen Luftzutritt in den Brennraum aufweist, dadurch gekennzeichnet, daß die Verkleidung auf ihrer Außenseite eine luftdurchströmte Vorwärmkammer (23) bildet, von der aus an der Kammerperipherie in die Kammer (23) eintretende Luft im Bereich der Durchtrittsöffnung vorgewärmt dem Brennraum (1) zugeführt wird.

19. Heizkessel nach Anspruch 18, dadurch gekennzeichnet, daß die frontseitige Kammerwandung (22) an ihrem der Durchtrittsöffnung entgegengesetzten Ende ein oder mehrere Luftzutrittsöffnungen (24) aufweist.

20. Heizkessel nach Anspruch 18, dadurch gekennzeichnet, daß die Luftzutrittsöffnung (25) von der Kammer (23) in den Brennraum (1) unterhalb der Durchtrittsöffnung angeordnet ist.

21. Heizkessel nach Anspruch 18, mit einem Ölbrenner zur Verwendung als Ölheizkessel, dadurch gekennzeichnet, daß die Vorwärmkammer (23) mit einer Luftansaugung des Ölbrenners (29) verbunden ist, und daß der den Brennraum (1) umgebende Abschnitt des doppelwandigen Teiles (2) auf den zum Brenner (29) gerichteten Seiten Kühlflächen (30, 31) aufweist.

0123994

22. Heizkessel nach Anspruch 21, dadurch gekennzeichnet, daß die Kühlflächen (30, 31) Abschnitte des doppelwandigen Teiles (2) sind.

23. Heizkessel nach einem der vorhergehenden Ansprüche, dadurch gekennzeichnet, daß der doppelwandige Teil (2) aus V4A-Edelstahl besteht.

24. Heizkessel nach einem der Ansprüche 1 bis 22, dadurch gekennzeichnet, daß der doppelwandige Teil (2) aus Aluminium besteht.

25. Heizkessel nach Anspruch 7, dadurch gekennzeichnet, daß der Boden des halbzylinderförmigen Abschnittes zum Kondensatablaß (12) hin leicht geneigt ist.

26. Heizkessel nach Anspruch 4, dadurch gekennzeichnet, daß die flachen Abschnitte der Wärmeaustauschwände (2', 2") zu den Seiten hin leicht geneigt sind.

27. Heizkessel nach Anspruch 1, dadurch gekennzeichnet, daß der Wärmeaustauschteil (2) auf der Rauchgasseite zumindest teilweise eine hitzebeständige und säurefeste Beschichtung aufweist.

28. Heizekessel nach Anspruch 27, dadurch gekennzeichnet, daß die Spitzen der Noppen (4) und die tiefliegenden Bereiche des halbzylinderförmigen Abschnittes eine Beschichtung aus Epoxidharz aufweisen.

29. Verfahren zur Herstellung eines Heizkessels nach Anspruch 1, dadurch gekennzeichnet, daß zurm Fertigung des doppelwandigen Teiles zwei genoppte Bleche (2', 2") mäanderförmig gebogen, die Bleche anschließend randseitig gefalzt, seitlich ineinandergeschoben und randseitig verschweißt werden.

30. Verfahren nach Anspruch 29, dadurch gekennzeichnet, daß die Wärmeaustauschschlange (10) zwischen die Bleche (2', 2") eingelegt wird, bevor die Bleche ineinandergeschoben werden.

Fig.1

Fig.2

Fig.3

Fig. 4

0123994

Fig. 5

Fig. 6

0123994

Fig. 7

Europäisches
Patentamt

**EUROPÄISCHER RECHERCHENBERICHT**

0123994
Nummer der Anmeldung

EP 84 10 4235

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A,D | DE-A-3 014 506 (CHAFFOTEAUX & MAURY)<br>* Anspruch 1; Figuren * | 1 | F 24 H 1/44<br>F 24 H 1/28<br>F 24 H 1/22<br>F 28 D 7/08 |
| | --- | | |
| A | US-A-2 553 713 (LEVIS)<br>* Figur 1 * | 1 | |
| | --- | | |
| A | PATENTS ABSTRACTS OF JAPAN, Band 6, Nr. 224(M-170)(1102), 9. November 1982; & JP - A - 57 127 793 (NIPPON DENSO K.K.) 09.08.1982<br>* Zusammenfassung * | 1,3 | |
| | --- | | |
| A | US-A-3 712 372 (TRANELL)<br>* Zusammenfassung * | 1 | |
| | --- | | RECHERCHIERTE SACHGEBIETE (Int. Cl. ³) |
| A | DE-C- 344 518 (MOREAU)<br>* Abbildung 3 | 4 | F 24 H<br>F 28 D |
| | --- | | |
| A | FR-A-2 485 173 (LECOMTE)<br>* Figur 5 * | 18 | |
| | ----- | | |

Der vorliegende Recherchenbericht wurde für alle Patentansprüche erstellt.

| Recherchenort<br>DEN HAAG | Abschlußdatum der Recherche<br>05-07-1984 | Prüfer<br>VAN GESTEL H.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
------------------------------------------
& : Mitglied der gleichen Patentfamilie, übereinstimmendes Dokument

EPA Form 1503 03.82